# EUROPEAN PATENT APPLICATION

(11) **EP 1 313 262 A1**
(43) Date of publication of application: **21.05.2003**
(21) Application number: 02017109.6
(22) Date of filing: 30.07.2002
(51) Int. Cl.: H04L 12/24, H04L 29/12

(54) **Integrating different naming conventions into a network management system**

(71) Applicant: Agilent Technologies Inc. a Delaware Corporation, Palo Alto, CA 94306 (US)
(72) Inventor: Hipp, Christoph, 72401 Haigerloch (DE); Nyguen, Trang, 71063 Sindelfingen (DE); Sarraf, Alain, 71083 Herrenberg (DE)
(74) Representative: Barth, Daniel

(57) **Abstract**

An interface (I) of a network management system (NMS) for managing network elements (NEs) of a communication network is described. The interface (I) comprises a list of assignments of names of the network elements (NEs) as provided e.g. by the vendors of the network elements (NEs), and names as used by the network management system (NMS). The names as used by the network management system (NMS) are unique.

## Description

The invention relates to an interface of a network management system. The invention also relates to a network management system and to a method of converting names of network elements as provided by the vendors of the network elements into names as used by a network management system and vice versa.

A network management system manages the transmission equipment of a communication network, i.e. the network elements of the communication network by providing an interface to those network elements which are present in the communication network. It may be adapted to the network elements of a specific company or may support the management of the network elements from multiple vendors.

In the case of multiple vendors, any one of the vendors may have its own naming convention for accessing its transmission equipment. Of course, the naming conventions of different vendors may be different. This leads e.g. to the problem that identical names are used by different vendors for their respective network elements so that the network management system is unable to differentiate these network elements.

### Object and advantages of the invention

It is therefore an object of the invention to provide an interface to a network management system which is capable of communicating with the network elements of different vendors.

This object is solved by the subject matters of the independent claims.

The invention provides a unique naming convention for the network elements within the network management system. These unique names may then be converted into the names of the network elements as provided by the vendors of the network elements. As a result, the invention allows different vendors to use their own naming conventions to access a network element independent of the internal conventions used by the network management system. For example, a network management system may internally use a serial numbering scheme to uniquely identify network elements within a network. A vendor utilizing the network management system may choose to identify a network element based on a combination of attributes pertaining to the network element, such as its vendor-specific identifier and internet address, another vendor may refer to generate a unique name string for the network element. With the help of the conversion to the unique naming convention within the network management system, no problems occur when the network elements e.g. have to be accessed.

The network management system of the invention, therefore, is independent of any naming convention of one of the vendors and provides a general and simple method to manage the network elements of the communication system. Furthermore, the inventive solution can be extended, if required.

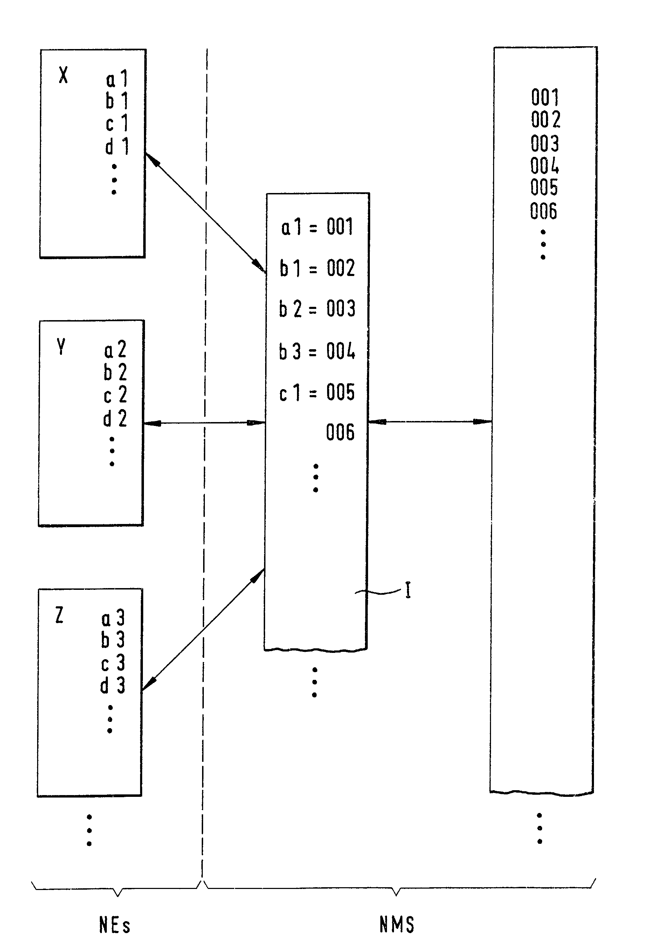

The invention together with further objects, advantages, features and aspects thereof will be more clearly understood from the following description taken in connection with the accompanying drawing.

### Description of embodiments of the invention

The only figure of the drawing is a schematic block diagram of an embodiment of an interface of a network management system according to the invention.

A communication network comprises a large number of network elements. These network elements are the transmission devices which are necessary to build up the communication network, e.g. multiplexors and other transmission equipment. The network elements are connected by passive transmission devices, e.g. fibers, cables, conduits.

The several network elements of the communication network may be provided by different vendors so that the access to the network elements may also be different. In particular, the names of the network elements which are necessary for accessing them, may be generated according to a convention specific to the vendor of the network element.

In the figure, it is assumed that network elements NEs are provided by three different vendors X, Y, Z. Furthermore, it is assumed that these vendors have different naming conventions for the names of the network elements NEs. This results in the names a1, b1, c1, d1, ... of the network elements NEs provided by vendor X, and in the names a2, b2, c2, d2 ... of the network elements NEs provided by vendor Y, and the names a3, b3, c3, d3 ... of the network elements NEs provided by vendor Z.

It is emphasized that the creation of e.g. the names c1 and d3 may be totally different. This may have the result that - on one hand - the names c1 and d3 are incompatible, i.e. have no common features at all. However, this may also have the consequence that - on the other hand - the names c1 and d3 are identical although being based on different naming conventions.

In the figure, a network management system NMS is provided for managing the network elements NEs. The network management system NMS comprises an interface I for converting the names of the network elements provided by the vendors into internal identifiers used by the network management system NMS.

The network management system NMS is based on a unique naming convention. For example, any network element used by the network management system NMS is given a serially numbered name. According to the figure, the names of the network elements used by the network management system NMS are 001, 002, 003, ... 010, 011, ... 999.

As an alternative to the serial numbering, it is also possible to use unique name strings created by a name generator.

The interface I comprises a list with the assignment of the names provided by the vendors of the network elements NEs and the names used by the network management system NMS. For example, the following equations are valid:
a1 = 001
b1 = 002
b2 = 003
b3 = 004
c1 = 005
...
a1 = 007
a2 = 008
...
c3 = 010
a3 = 011
...

As a result, the names of the network elements NEs as used by the network management system NMS are unique. No incompatibility or identity is possible with respect to these names within the network management system NMS.

If an access to one of the network elements NEs is carried out, the unique name as used within the network management system NMS is converted by the interface I into the corresponding name as provided by the vendors of the network element NEs. The same is valid for a required conversion of the names as provided by the vendors into the unique name as used within the network management system NMS. Or in other words: If a vendor accesses the network element using his/her own convention, the identifier used by the vendor is mapped into the mentioned internal identifier used by the NMS.

If a new network element is added, a new unique name is assigned to this new network element within the network management system NMS. This new assignment is added to the list comprised in the interface I. As a result, the interface I of the network management system NMS is extendable with respect to new network elements NEs.

If a network element is removed from the communication network, its internal identifier is also removed from the interface I, thus freeing the name assignment for later use.

## Claims

1. An interface (I) of a network management system (NMS) for managing network elements (NEs) of a communication network comprising a list of assignments of names of the network elements (NEs) as provided e.g. by the vendors of the network elements (NEs), and names as used by the network management system (NMS) wherein the names as used by the network management system (NMS) are unique.

2. Interface (I) of claim 1 wherein the names as used by the network management system (NMS) are serially numbered.

3. Interface (I) of claim 1 wherein the list of assignments is used to convert the names as provided e.g. by the vendors into the names as used by the network management system (NMS) and vice versa.

4. A network management system (NMS) for managing network elements (NEs) of a communication network comprising an interface (I) with a list of assignments of names of the network elements (NEs) as provided e.g. by the vendors of the network elements (NEs), and names as used by the network management system (NMS) wherein the names as used by the network management system (NMS) are unique.

5. A method of converting names of network elements (NEs) as provided e.g. by the vendors of the network elements (NEs) into names as used by a network management system (NMS) and vice versa comprising the step of using a list of assignments of the names of the network elements (NEs) as provided e.g. by the vendors, and the names as used by the network management system (NMS) wherein the names as used by the network management system (NMS) are unique.
